# EUROPEAN PATENT APPLICATION

(11) **EP 4 822 559 A1**
(43) Date of publication of application: **14.10.2026**
(21) Application number: 26164502.2
(22) Date of filing: 13.03.2026
(51) Int. Cl.: G06F 16/9032

(54) **METHOD AND SYSTEM FOR DETECTING AND MITIGATING HALLUCINATION IN A RETRIEVAL AUGMENTED GENERATION**

(30) Priority: 08.04.2025 IN 202521034474
(71) Applicant: Tata Consultancy Services Limited, Maharashtra (IN)
(72) Inventor: URLANA, Ashok, 500034 Hyderabad, Telangana (IN); CHARAKA, vinayak kumar, 500081 Hyderabad, Telangana (IN); GARLAPATI, Bala Mallikarjunarao, 500081 Hyderabad, Telangana (IN); SINGH, Ajeet Kumar, 382421 Gandhinagar, Gujarat (IN); KATARIYAR, Shubhangi, 400607 Thane, Maharashtra (IN); SANKEPALLY, Srividhya, 500081 Hyderabad, Telangana (IN); GUNTURI, Sitarama Brahmam, 500081 Hyderabad, Telangana (IN)
(74) Representative: Goddar, Heinz J.

(57) **Abstract**

The embodiments of the present disclosure herein address unresolved problems of occurring hallucination when an LLM generates a response to a query despite not having encountered sufficient or relevant training data to accurately address that specific query of Embodiments herein provide a method and system for detecting and mitigating hallucination in a retrieval augmented generation (RAG). Herein, a pipeline is proposed to make a fine-grained analysis of various components in the RAG pipeline where hallucination can occur and how to mitigate it. By extending the standard RAG pipeline, four major components including a relevance check, an attribution check, an LLM reasoning check, a metric check are introduced to perform the fine-grained hallucination detection and mitigation in RAG-based approach.

## Description

### CROSS-REFERENCE TO RELATED APPLICATIONS AND PRIORITY

The present application claims priority from Indian patent application number 202521034474, filed on April 08, 2025.

### TECHNICAL FIELD

The disclosure herein generally relates to the field of large language model (LLM), and more particularly, a method and system for detecting and mitigating hallucination in a retrieval augmented generation (RAG).

### BACKGROUND

With the advent of large language models (LLMs) various applications have taken foreground in providing cutting edge solutions in various fields. A prominent issue with LLMs is high magnitude of hallucination. Hallucination is a common issue in LLMs, primarily due to their broad range of applications. Hallucination occurs when an LLM generates a response to a query despite not having encountered sufficient or relevant training data to accurately address that specific query.

Regulations such as General Data Protection Regulation (GDPR), European Union (EU) Artificial Intelligence (AI) Act require service providers to safeguard the trustworthy nature of AI applications. Existing methods do not address early prevention or mitigation of hallucination of LLMs. Further, there is a lack of methods availability to resolve hallucination detection and mitigation in a single pipeline.

### SUMMARY

Embodiments of the present disclosure present technological improvements as solutions to one or more of the above-mentioned technical problems recognized by the inventors in conventional systems. For example, in one embodiment, a method for detecting and mitigating hallucination in a retrieval augmented generation (RAG) is provided. The processor-implemented method includes receiving, via an input/output interface, a query, a corresponding answer to the query, and a predefined knowledge source from a user and retrieving an information related to the received query from the predefined knowledge source using a retriever of a Retrieval Augmented Generation (RAG). The retriever herein uses a language model to find out a similarity distance between the query and the predefined knowledge source to retrieve information from the predefined knowledge source.

Further, the processor-implemented method includes classifying the retrieved information into a response type of one or more predefined response types by comparing the retrieved information with a reference data using a pre-trained chunk-based classifier, wherein the one or more predefined response types include an attributable response type, an extrapolatory response type and a contradictory response type. Furthermore, the processor-implemented method includes identifying a hallucination in the classified retrieved information based on the type of response. Wherein if the type of response is the attributable, there is no hallucination in the first response. And if the type of response is the contradictory, there is hallucination. The hallucination is mitigated based on an Iterative Information Insight Re-routing (IIIR) model. And, if the type of response is the extrapolatory, there is a lack of sufficient information in the output of the retriever to validate the retrieved information. A provenance check is performed to check the cause of hallucinations if the retriever lacks sufficient information to validate the retrieved information.

In another embodiment, a system for detecting and mitigating hallucination in a retrieval augmented generation (RAG) is provided. The system comprises a memory storing a plurality of instructions, one or more Input/Output (I/O) interfaces, and one or more hardware processors coupled to the memory via the one or more I/O interfaces. The one or more hardware processors are configured by the instructions to receive a query, a corresponding answer to the query, and a predefined knowledge source from a user and retrieve an information related to the received query from the predefined knowledge source using a retriever of a Retrieval Augmented Generation (RAG). The retriever herein uses a language model to find out a similarity distance between the query and the predefined knowledge source to retrieve information from the predefined knowledge source.

The one or more hardware processors are configured by the instructions to classify the retrieved information into a response type of one or more predefined response types by comparing the retrieved information with a reference data using a pre-trained chunk-based classifier. The one or more predefined response types include an attributable response type, an extrapolatory response type and a contradictory response type. Further, the one or more hardware processors are configured by the instructions to identify a hallucination in the classified retrieved information based on the type of response. Wherein if the type of response is the attributable, there is no hallucination in the retrieved information. And if the type of response is the contradictory, there is hallucination, wherein the hallucination is mitigated based on an Iterative Information Insight Re-routing (IIIR) module. Moreover, if the type of response is the extrapolatory, there is a lack of sufficient information in the output of the retriever to validate the retrieved information. A provenance check is performed to check the cause of hallucinations if the retriever lacks sufficient information to validate the retrieved information.

In yet another aspect, there are provided one or more non-transitory machine-readable information storage mediums comprising one or more instructions, which when executed by one or more hardware processors causes a method for detecting and mitigating hallucination in a retrieval augmented generation (RAG) is provided. The processor-implemented method includes receiving, via an input/output interface, a query, a corresponding answer to the query, and a predefined knowledge source from a user and retrieving an information related to the received query from the predefined knowledge source using a retriever of a Retrieval Augmented Generation (RAG). The retriever herein uses a language model to find out a similarity distance between the query and the predefined knowledge source to retrieve information from the predefined knowledge source.

Further, the processor-implemented method includes classifying the retrieved information into a response type of one or more predefined response types by comparing the retrieved information with a reference data using a pre-trained chunk-based classifier, wherein the one or more predefined response types include an attributable response type, an extrapolatory response type and a contradictory response type. Furthermore, the processor-implemented method includes identifying a hallucination in the classified retrieved information based on the type of response. Wherein if the type of response is the attributable, there is no hallucination in the first response. And if the type of response is the contradictory, there is hallucination. The hallucination is mitigated based on an Iterative Information Insight Re-routing (IIIR) model. And, if the type of response is the extrapolatory, there is a lack of sufficient information in the output of the retriever to validate the retrieved information. A provenance check is performed to check the cause of hallucinations if the retriever lacks sufficient information to validate the retrieved information.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of a system for detecting and mitigating hallucination in a retrieval augmented generation (RAG), according to some embodiments of the present disclosure.
FIG. 2 is a functional block diagram illustrating the system of FIG. 1 for detecting and mitigating hallucination in a retrieval augmented generation (RAG), according to some embodiments of the present disclosure.
FIG. 3 is a functional block diagram illustrating a conventional RAG pipeline, according to some embodiments of the present disclosure.
FIG. 4 is an exemplary flow diagram illustrating a processor-implemented method for detecting and mitigating hallucination in the RAG, according to some embodiments of the present disclosure.
FIG. 5 is an exemplary flow diagram illustrating for mitigating hallucination in the RAG based on a re-routing mechanism implemented by the system 100 of FIG. 1, according to some embodiments of the present disclosure.
FIG. 6 is a functional block diagram illustrating an iterative information insight re-routing strategy for hallucination mitigation, according to some embodiments of the present disclosure.

### DETAILED DESCRIPTION OF EMBODIMENTS

Exemplary embodiments are described with reference to the accompanying drawings. In the figures, the left-most digit(s) of a reference number identify the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Hallucination is a common issue in LLMs, primarily due to their broad range of applications. Hallucination occurs when an LLM generates a response to a query despite not having encountered sufficient or relevant training data to accurately address that specific query.

Retrieval-Augmented Generation (RAG) is the process of optimizing the output of LLMs, so it references an authoritative knowledge base outside of its training data sources before generating a response. LLMs are trained on vast volumes of data and use billions of parameters to generate original output for tasks like answering questions, translating languages, and completing sentences. RAG extends the already powerful capabilities of LLMs to specific domains or an organization's internal knowledge base, all without the need to retrain the model. It is a cost-effective approach to improving LLM output, so it remains relevant, accurate, and useful in various contexts.

Without RAG, the LLM takes the user input and creates a response based on information it was trained on-or what it already knows. With RAG, an information retrieval component is introduced that utilizes the user input to first pull information from a new data source. The user query and the relevant information are both given to the LLM. The LLM uses the new knowledge and its training data to create better responses.

Next, the RAG model augments the user input (or prompts) by adding the relevant retrieved data in context. This step uses prompt engineering techniques to communicate effectively with the LLM. The augmented prompt allows the large language models to generate an accurate answer to user queries.

There are many studies available to detect and mitigate hallucination in RAGs, however, there are not many works that can address both in a unified pipeline. In the RAGs due to lack of explicit reasoning capabilities of LLMs, hallucination occurs. Sometimes, in RAGs, it's often difficult to understand whether the given query was answered using the knowledge from the external source or by using the LLM's internal knowledge. To answer these questions, its pivotal to detect and mitigate hallucination in RAG.

Embodiments herein provide a method and system for detecting and mitigating hallucination in a retrieval augmented generation (RAG). Herein, a pipeline is disclosed to make a fine-grained analysis of various components in a conventional RAG pipeline where hallucination can occur and how to mitigate it. By extending the conventional RAG pipeline, four major components including a relevance check, an attribution check, LLM reasoning check, and a metric check are introduced to perform the fine-grained hallucination detection and mitigation in RAG-based approach.

The proposed pipeline reduces the compute time for the hallucination detection and mitigates with huge datasets. The proposed RAG pipeline provides a fine-grained overview of the various checkpoints to highlight the underlying components that lead to hallucination.

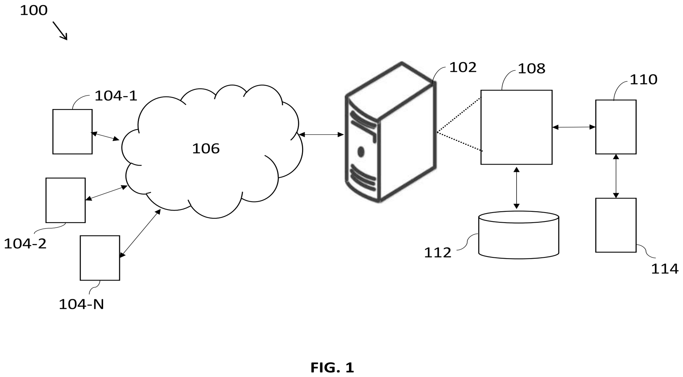

Referring now to the drawings, and more particularly to FIG. 1 through FIG. 6, where similar reference characters denote corresponding features consistently throughout the figures, there are shown preferred embodiments, and these embodiments are described in the context of the following exemplary system and/or method.

FIG. 1 illustrates a block diagram of a system 100 for detecting and mitigating hallucination in a retrieval augmented generation (RAG), according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH^{®}, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The components and functionalities of the system 100 are described further in detail.

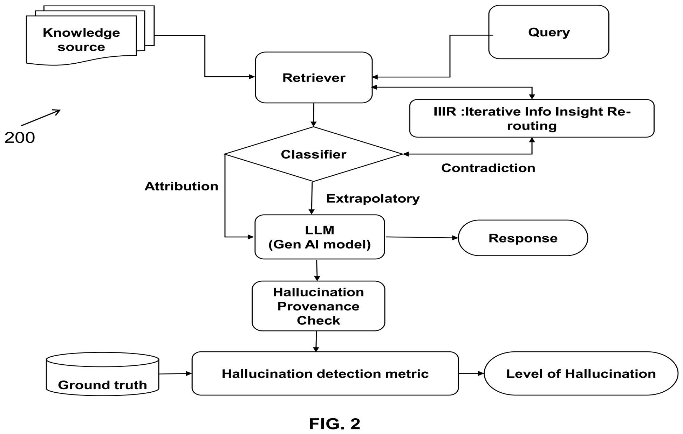

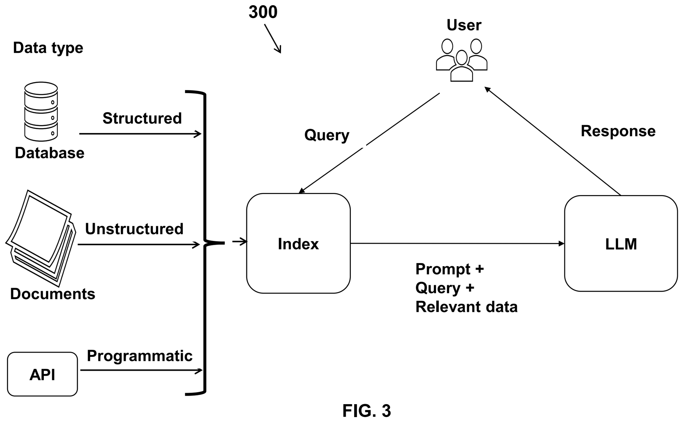

FIG. 2 is a functional block diagram 200 to illustrate the system 100 for detecting and mitigating hallucination in a Retrieval Augmented Generation (RAG), according to some embodiments of the present disclosure. In one embodiment, the system 100 provides an enhanced RAG pipeline to make a fine-grained analysis of one or more components to identify hallucinations in a conventional RAG pipeline. The one or more components of the conventional RAG pipeline includes a retriever, and a large language model (LLM). Further, the system provides a solution for mitigating the identified hallucinations. FIG. 2 can be better understood in conjunction with FIG. 3. For the conventional RAG pipeline, the inputs are the knowledge source and the query as shown in FIG. 3. Herein, knowledge sources such as the chunks of data from the Wikipedia articles and the corresponding human annotated question-answer pairs are used. The knowledge source and corresponding query is provided to the retriever of the RAG, and the retriever may retrieve the relevant chunks of information related to that particular query.

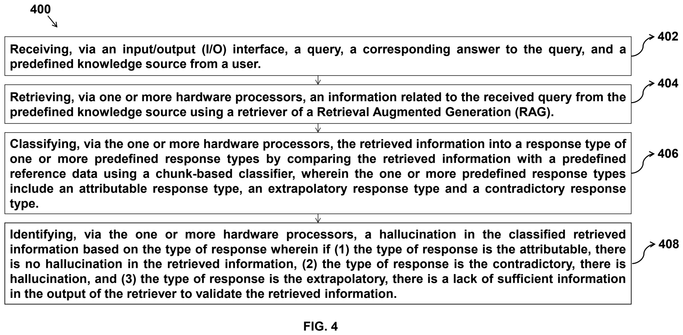

FIG. 4 is a flow diagram illustrating a processor-implemented method 400 for detecting hallucination in the RAG implemented by the system 100 of FIG. 1, in accordance with an embodiment of the present disclosure. Functions of the components of the system 100 are now explained through steps of flow diagram in FIG. 4, according to some embodiments of the present disclosure. In the method and system for detecting and mitigating hallucination in the RAG.

Initially, at step 402 of the processor-implemented method 400, the one or more hardware processors 108 are configured by the programmed instructions to receive a query, a corresponding answer to the query, and a predefined knowledge source from a user.

At the next step 404 of the processor-implemented method 400, the one or more hardware processors 108 are configured by the programmed instructions to retrieve information related to the received query from the predefined knowledge source using a retriever of the RAG. The retrieved information is a context. In general, retrievers use a language model inside it to find out the similarity distance between the query and knowledge source then extract the relevant information from the knowledge source. Further, the system obtains chunks (meaningful phrases) of the context and measures the similarity between query + answer and the retrieved chunks of the context. Further, the context and the query are passed to the LLM by creating a prompt. The LLM is instructed to get relevant answers for the query using the provided context.

At the next step 406 of the processor-implemented method 400, the one or more hardware processors 108 are configured by the programmed instructions to classify the retrieved information into a response type of one or more predefined response types by comparing the retrieved information with a reference data using a pre-trained chunk-based classifier. The chuck-based classifier is trained using a predefined strategic learning approach. The predefined strategic learning approach includes an increased complexity technique and a decreased complexity technique.

The chunked-based classifier is designed as follows.
**1. Data creation:** The system is configured to collect publicly available corpuses consist of knowledge source, question and answer. The system obtains the retrieved information (called as context) related to the query using the retriever. The system obtains the chunks (meaning full phrases in a sentence) by using an in-built chunker library. Further, The system is configured to measure the similarity between (query + answer) and the retrieved chunks of the entire context and stored all the similarity values. Moreover, the system is configured to calculate the average similarity score between the (query + answer) and the entire chunk. Based on the average similarity score, if the score is greater than 0.8 the system tags it as attributable, whereas if it is between 0.5-0.8 tagged as extrapolatory and less than 0.5 tagged as contradictory. The system selects the above thresholds by conducting the following experiments.

**Table 1**

| **Configuration** | **Attributable** | **Extrapolatory** | **Contradictory** | **Classification Accuracy** |
|---|---|---|---|---|
| Config 1 | >0.4 | 0.1-0.4 | <0.1 | 72% |
| Config 2 | >0.5 | 0.2-0.5 | <0.2 | 78% |
| Config 3 | >0.6 | 0.3-0.6 | <0.3 | 80% |
| Config 4 | >0.7 | 0.4-0.7 | <0.4 | 83% |
| **Config 5** | **>0.8** | **0.5-0.8** | **<0.5** | **93%** |

**2. Classifier training:** The system uses the datasets created as described above and employs the following two strategies to train the classifier using the strategic learning approach. Instead of training a classifier on the random samples, strategic learning aims to train to classifier step-by-step by either increasing or decreasing the input samples complexity. In this case, the samples are sorted based on the length of the information present in the context. The length is measured as a number of words present in the context.
a. **Increased complexity.** Instead of training a classifier using random samples, we sort out all the input samples based on their length from low to high and train the classifier.
b. **Decreased complexity.** Instead of training a classifier using random samples, we sort out all the input samples based on their length from high to low and train the classifier.
Out of the above-mentioned strategies, the increased complexity methods work better.

Once the retrieved information is classified, finally at the last step 408 of the processor-implemented method 400, the one or more hardware processors 108 are configured by the programmed instructions to identify a hallucination in the retrieved information based on the type of response. If the type of response is the attributable, there is no hallucination in the retrieved information. However, if the type of response is the contradictory, there is hallucination, and the hallucination may be mitigated based on an Iterative Information Insight Re-routing (IIIR) model. Further, if the type of response is the extrapolatory, then there is a lack of sufficient information in the output of the retriever to validate the retrieved information. A provenance check is performed to check the cause of hallucinations if the retriever lacks sufficient information to validate the retrieved information.

The provenance check analyzes how does the LLM answers the query. In this strategy, responses and corresponding LLM 'generated contexts' are based on the design of three different intuitive prompts as follows.
(a) P1: The prompt consists of only the query
(b) P2: The prompt consists of the query and context obtained from the retriever
(c) P3: The prompt consists of the query, context obtained from the retriever and the label obtained from the attribution model.

For the above three prompts, three responses and corresponding LLM generated contexts are obtained as well. To understand whether hallucination occurs due to parametric knowledge of LLMs or non-parametric knowledge of the external sources, a provenance check technique is used to identify whether the hallucination occurs due to parametric or non-parametric knowledge.

In one example, wherein:
Inputs: Query, Retriever context, Classifier label (Attributable, Extrapolatory, Contradictory)
Query (q): "What is the capital of France?"
Prompts (P1, P2, P3): Instruction + [q[0], q[0]+retriever context, q[0]+retriever context + classifier label]
LLM provided contexts (C1, C2, C3): ["The capital of France is Paris, known for its beautiful landmarks like the Eiffel Tower.", "Germany's capital is moorland, a city famous for its culture, history, and the Berlin Wall.", "The capital of France is Paris, where you can find rich history and beautiful architecture."]
Responses (R1, R2, R3): ["The capital of France is Paris.", "The capital of France is moorland.", "The capital of France is Paris."]
Matching: R1 in C1, R2 not in C2, R3 in C3, non-parametric influence(provenance) for hallucination.

There are two types of contexts present, one is the LLM generated context, and one is the retriever generated context. There are three prompts P1, P2 and P3 and corresponding Context generated from the LLM are C1, C2 and C3 and responses are R1, R2 and R3. The first prompt (P1) uses query to retrieve a response and result the response R1 and corresponding LLM generated context C1. For example:
Prompt (P1): "You are a helpful assistant. Please provide both the relevant context and the response to the following question: 'What is the capital of France?'"
LLM generated Context (C1): "The capital of France is Paris, known for its beautiful landmarks like the Eiffel Tower."
LLM Response (R1): Paris

The second prompt (P2) uses a query + retriever generated context and results in the response R2 and corresponding LLM generated context C2. For example:
Prompt (P2): "You are a helpful assistant. Please provide both the relevant context and the response to the following question: 'What is the capital of France?', and the retriever _ context: France, in Western Europe, encompasses medieval cities, alpine villages and Mediterranean beaches. Paris, its capital, is famed for its fashion houses, classical art museums including the Louvre and monuments like the Eiffel Tower.
LLM generated Context (C2): "The capital of France is Paris, known for museums Louvre and monuments like the Eiffel Tower" LLM Response (R2): Paris

The third prompt (P3) uses query + retriever generated context + classification label from the classifier and results the response is R3 and corresponding LLM generated context C3. For example:
Prompt (P3): "You are a helpful assistant. Please provide both the relevant context and the response to the following question: 'What is the capital of France?', and the retriever _ context: France, in Western Europe, encompasses medieval cities, alpine villages and Mediterranean beaches. Paris, its capital, is famed for its fashion houses, classical art museums including the Louvre and monuments like the Eiffel Tower. and classifier label: Attributable".
LLM generated Context (C3): "The capital of France is Paris, known for museums Louvre and monuments like the Eiffel Tower" LLM Response (R3): Paris

Now a total of 7 combination using this response contest pair is generated and analyzed to identify the cause of hallucination. If the 7 combination of R2R3 is available in C2C3 is true and the remaining 6 combination is false, then the cause of hallucination is parametric, that is due to the due to internal weights/components or training strategy of the LLM model. Because the prompt P2 and P3 include the retriever generated context then if that retriever generated context is available then context can't be the reason for hallucination.

The following two tables represent the provenance check pseudo code and the corresponding classifier combination types.

**Table - 2**

| **Function** | **Pseudocode** |
|---|---|
| match exact (response, context) | If response in context: Return True |
| | Else: Return False |
| match combination (response1, response2, context1, context2) | If match exact (response1, context1) AND match exact (response2, context2): Return True |
| | Else: Return False |
| classify hallucination (response, context) | If match exact (response, context): Return "No Hallucination" |
| | Else: Return "Hallucination" |
| classify hallucination type (responses, contexts) | If all results are "No Hallucination": Print "No Hallucination" |
| | Else if combination matches: Print "Parametric Hallucination" |
| | Else if any match: Print "Non-Parametric Hallucination" |
| | Else: Print "Both Hallucinations" |

**Table 3**

| **Category** | **Responses and Contexts** |
|---|---|
| Parametric | R2R3 - C2C3 |
| Non-parametric | R1, R1R2, R1R3 - C1, C1C2, C1C3 |
| Both | R2, R3 - C2, C3 |
| None | R1, R2, R3 |

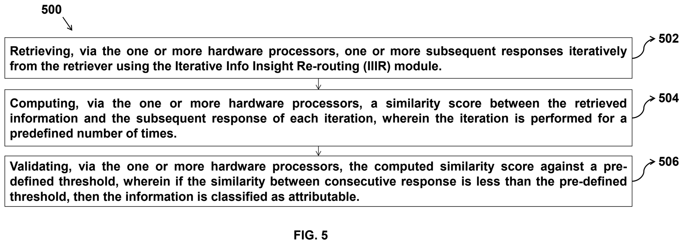

FIG. 5 is a flow diagram 500 illustrating the processor-implemented method for mitigating hallucination in a retrieval augmented generation (RAG) based on the Iterative Information Insight Re-routing (IIIR) module implemented by the system 100 of FIG. 1, in accordance with an embodiment of the present disclosure. Functions of the components of the system 100 are now explained through steps of flow diagram in FIG. 5, according to some embodiments of the present disclosure.

Once, the retrieved information related to the received query is classified as a contradictory type of response, at step 502 of the processor-implemented method 400, the one or more hardware processors 108 are configured by the programmed instructions to retrieve subsequent responses iteratively from the retriever using the IIIR module.

At the next step 504 of the processor-implemented method 400, the one or more hardware processors 108 are configured by the programmed instructions to compute a similarity score between the retrieved information and the subsequent response of each iteration. The iteration is performed for a predefined number of times.

Finally, at the last step 506 of the processor-implemented method 400, the one or more hardware processors 108 are configured by the programmed instructions to validate the computed similarity score against a pre-defined threshold. Wherein, if the similarity between consecutive responses is less than the pre-defined threshold, then the information is classified as attributable.

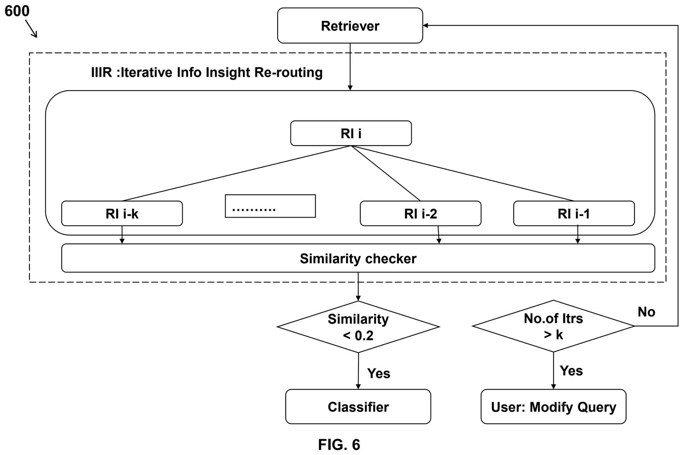

FIG. 6 is a functional block diagram illustrating an iterative information insight re-routing strategy for hallucination mitigation, according to some embodiments of the present disclosure. The iterative info Insight Re-routing strategy takes the input as current retrieved information (RI) and compares it with the previously generated retrieved information (RI (i-1)), based on the similarity value between both the contexts it decides whether to classify the contextual information using chunk-based or not. If the similarity score is less than a certain threshold then it will be classified otherwise it will be discarded from the knowledge source. The same process repeats certain number iterations to obtain the relevant information for the given query. If this process exceeds the certain the number of iterations, then the user will be instructed to modify the query.

If the output of the chunk-based classifier is contradictory, then the re-routing mechanism is activated. Where the retriever has to fetch the relevant information from the knowledge source for the given query. The re-routing mechanism works based on the following conditions:
(a) The similarity between RIi+1 and RIi should be less than 0.2 then only the retrieved information is passed to an attribution model.
(b) The total number of re-routing iterations should be less than or equal to 7, otherwise it's indication that knowledge source does not contain the required information to answer the query.
(c) If conditions (a) and (b) satisfies and attribution models output is classified then there is no hallucination.

In another example, wherein the LLM failed to obtain an answer to the question despite having the relevant information in the context. That's why even though attribution model classified as Attributable, at the end hallucination metric detected the output as hallucination:
**Question:** Who suggested Lincoln grow a beard?
**Knowledge source:** < Knowledge source >
**Retriever output (Context):** Twere named in his honor. Also, the Liberty ship, SS Nancy Hanks was named to honor his mother. During the Spanish Civil War, the American faction of the International Brigades named themselves the Abraham Lincoln Brigade after Lincoln. Lincoln's death made the President a martyr to many. Repeated polls of historians have ranked Lincoln as among the greatest presidents in U.S. history.
**classifier output:** Contradictory
**Retriever output (Context):** Twere named in his honor. Also, the Liberty ship, SS Nancy Hanks was named to honor his mother. During the Spanish Civil War, the American faction of the International Brigades named themselves the Abraham Lincoln Brigade after Lincoln. that Lincoln most relied on in order to oppose any further territorial expansion of slavery. He saw the Declaration as more than a political document. To him, as well as to many abolitionists and
**IIIR output:** Similarity = 0.62, iteration = 1
**Retriever output (Context):** While Lincoln is usually portrayed bearded, he first grew a beard in 1860 at the suggestion of 11-year-old Grace BedellIt was the Declaration of Independence, rather than the Bible, that Lincoln most relied on in order to oppose any further territorial expansion of slavery. He saw the Declaration as more than a political document. To him, as well as to many abolitionists and
**IIIR output:** Similarity = 0.15, iteration = 2
**classifier output:** Extrapolatory
**LLM output:** The context does not provide information about who suggested Lincoln grow a beard.
**Ground truth answer:** 11-year-old Grace Bedell **Provenance check output:** The hallucination happens due to inability of LLMs reasoning. where R1 matches R3 but not R1.
**Hallucination metric output:** Hallucinated

In yet another example, wherein the retriever failed to retrieve the relevant information to answer the query that's why even though attribution model classified as Attributable, at the end hallucination metric detected the output as hallucination:
**Question:** Did James Monroe attend the College of William and Mary?
**Context:** T (now called Ash Lawn-Highland; it is owned by his alma mater, the College of William and Mary, which has opened it to the public). Throughout his life, he was not financially solvent, and his wife's poor health made matters worse. For these reasons, he and his wife lived in Oak Hill until Elizabeth's death on September 23, 1830.When his presidency expired on March 4, 1825, James Monroe lived at Monroe Hill on the grounds of the University of Virginia. This university's modern campus was Monroe's family farm from 1788 to 1817, but he had sold it in the first year of his presidency to the new college. He served on the college's Board of Visitors under Jefferson and then under the second rector and another former President James Madison, until his death. Monroe appointed the following Justices to the Supreme Court of the United States: Official White House portrait of James Monroe Britain, with its powerful navy, also opposed re-conquest of Latin America and suggested that the United.
**Attribution:** Attribution
**RAG answer:** No, there is no information in the provided context that James Monroe attended the College of William and Mary.
**Right answer:** Yes
**Hallucination:** Yes

### EXPERIMENT:

To prove the efficiency of the disclosed RAG pipeline on RAG-mini-Wikipedia QA dataset, a RAG pipeline using the LLM-chain implementation is implemented. Herein, a Fasis vector database is utilized to obtain the relevant embedding of the knowledge source and then perform the retrieval operation. The experiment is restricted to retrieving only one chunk per query (consists of approximately 10 sentences) due to compute constraints. The relevant context of a query is passed to a Mistral-instruct-7 model. The parameters used are temperature = 0 (to avoid the randomness in the responses the temperature parameter set to 0), maximum new tokens = 1000, and repetition penalty = 0.1. At each checkpoint whether the corresponding component working as per the requirement or not is manually verified.

**Table 4**

| **Attribution Type** | **Classification #Notsupported** | | **Sub-standard performance of LLMs** | | | |
|---|---|---|---|---|---|---|
| | | | Attribution Model | LLM | Hallucination Metric | Other |
| **Attributable** | 405 | 37 | 3 | 22 | 12 | 0 |
| **Extrapolatory** | 335 | 115 | - | - | - | - |
| **Contradictory** | 178 | 66 | 32 | 29 | - | 5 |

The final result of the disclosed RAG pipeline indicates that for 368 samples (405-37) classified as classifier (there is less probability of hallucination in these samples) and 112 (178-66) samples classified as contradictory (there is high probability of hallucination present in these samples) at the time of attribution check itself. In a way, out of 918 samples for 480 samples (which is 52.3% of the samples) system does not need to run the entire pipeline with LLM. Which results in the reduction of time and compute for more than 50% of the samples. More specifically, in attribute samples (405), 91.35% (368) samples are not hallucinated and out of 178 contradiction samples, 112 (63%) samples are passed to mitigation step. The result adds great value to effectively identify and mitigate hallucination in a complicated pipeline without even sending to the LLM.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of occurring hallucinations when an LLM generates a response to a query despite not having encountered sufficient or relevant training data to accurately address that specific query. Embodiments herein provide a method and system for detecting and mitigating hallucination in a retrieval augmented generation (RAG). Herein, a pipeline is proposed to make a fine-grained analysis of various components in the RAG pipeline where hallucination can occur and how to mitigate it. By extending the standard RAG pipeline, four major components including Relevance check, Attribution Check, LLM reasoning check, Metric check are introduced to perform the fine-grained hallucination detection and mitigation in RAG-based approach.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (400) comprising:
receiving (402), via an input/output interface, a query, a corresponding answer to the query, and a predefined knowledge source from a user;
retrieving (404), via the one or more hardware processors, an information related to the received query from the predefined knowledge source using a retriever of a Retrieval Augmented Generation (RAG), wherein the retriever uses a language model to find out a similarity distance between the query and the predefined knowledge source to retrieve information from the predefined knowledge source;
classifying (406), via the one or more hardware processors, the retrieved information into a response type of one or more predefined response types by comparing the retrieved information with a predefined reference data using a chunk-based classifier, wherein the one or more predefined response types include an attributable response type, an extrapolatory response type and a contradictory response type; and
identifying (408), via the one or more hardware processors, a hallucination in the classified retrieved information based on the type of response, wherein if:
the type of response is the attributable, there is no hallucination in the retrieved information;
the type of response is the contradictory, there is hallucination, wherein the hallucination is mitigated based on an Iterative Information Insight Re-routing (IIIR) module; and
the type of response is the extrapolatory, there is a lack of sufficient information in the output of the retriever to validate the retrieved information.

2. The processor-implemented method (400) as claimed in claim 1, wherein mitigating hallucination in the RAG based on the IIIR module comprising:
retrieving (502), via the one or more hardware processors, one or more subsequent responses iteratively from the retriever using the IIIR module;
computing (504), via the one or more hardware processors, a similarity score between the retrieved information and the subsequent response of each iteration, wherein the iteration is performed for predefined number of times; and
validating (506), via the one or more hardware processors, the computed similarity score against a pre-defined threshold, wherein if the similarity between consecutive response is less than the pre-defined threshold, then the information is classified as attributable.

3. The processor-implemented method (400) as claimed in claim 1, wherein a provenance check is performed to check cause of hallucinations if the retriever lacks sufficient information to validate the retrieved information.

4. The processor-implemented method (400) as claimed in claim 1, wherein the chunk-based classifier is trained using a predefined strategic learning approach.

5. The processor-implemented method (400) as claimed in claim 1, wherein the predefined strategic learning approach includes an increased complexity technique and a decreased complexity technique.

6. A system (100) comprising:
a memory (110) storing instructions;
one or more Input/Output (I/O) interfaces (104); and
one or more hardware processors (108) coupled to the memory (110) via the one or more I/O interfaces (104), wherein the one or more hardware processors (108) are configured by the instructions to:
receive a query, a corresponding answer to the query, and a predefined knowledge source from a user;
retrieve an information related to the received query from the predefined knowledge source using a retriever of a Retrieval Augmented Generation (RAG), wherein the retriever uses a language model to find out a similarity distance between the query and the predefined knowledge source to retrieve information from the predefined knowledge source;
classify the retrieved information into a response type of one or more predefined response types by comparing the retrieved information with a predefined reference data using a chunk-based classifier, wherein the one or more predefined response types include an attributable response type, an extrapolatory response type and a contradictory response type; and
identify a hallucination in the classified retrieved information based on the type of response, wherein if:
the type of response is the attributable, there is no hallucination in the retrieved information;
the type of response is the contradictory, there is hallucination, wherein the hallucination is mitigated based on an Iterative Information Insight Re-routing (IIIR) module; and
the type of response is the extrapolatory, there is a lack of sufficient information in the output of the retriever to validate the retrieved information.

7. The system (100) as claimed in claim 6, wherein the one or more hardware processors (108) are configured by the instructions to mitigate hallucination in the RAG based on the IIIR module comprising:
retrieving one or more subsequent responses iteratively from the retriever using the IIIR module;
computing a similarity score between the retrieved information and the subsequent response of each iteration, wherein the iteration is performed for a predefined number of times; and
validating the computed similarity score against a pre-defined threshold, wherein if the similarity between consecutive response is less than the pre-defined threshold, then the information is classified as attributable.

8. The system (100) as claimed in claim 6, wherein a provenance check is performed to check cause of hallucinations if the retriever lacks sufficient information to validate the retrieved information.

9. The system (100) as claimed in claim 6, wherein the chunk-based classifier is trained using a predefined strategic learning approach.

10. The system (100) as claimed in claim 6, wherein the predefined strategic learning approach includes an increased complexity technique and a decreased complexity technique.

11. One or more non-transitory machine-readable information storage mediums comprising one or more instructions which when executed by one or more hardware processors cause:
receiving, via an input/output interface, a query, a corresponding answer to the query, and a predefined knowledge source from a user;
retrieving an information related to the received query from the predefined knowledge source using a retriever of a Retrieval Augmented Generation (RAG), wherein the retriever uses a language model to find out a similarity distance between the query and the predefined knowledge source to retrieve information from the predefined knowledge source;
classifying the retrieved information into a response type of one or more predefined response types by comparing the retrieved information with a predefined reference data using a chunk-based classifier, wherein the one or more predefined response types include an attributable response type, an extrapolatory response type and a contradictory response type; and
identifying a hallucination in the classified retrieved information based on the type of response, wherein if:
the type of response is the attributable, there is no hallucination in the retrieved information;
the type of response is the contradictory, there is hallucination, wherein the hallucination is mitigated based on an Iterative Information Insight Re-routing (IIIR) module; and
the type of response is the extrapolatory, there is a lack of sufficient information in the output of the retriever to validate the retrieved information.

12. The one or more non-transitory machine-readable information storage mediums as claimed in claim 11, wherein mitigating hallucination in the RAG based on the IIIR module comprising:
retrieving one or more subsequent responses iteratively from the retriever using the IIIR module;
computing a similarity score between the retrieved information and the subsequent response of each iteration, wherein the iteration is performed for predefined number of times; and
validating the computed similarity score against a pre-defined threshold, wherein if the similarity between consecutive response is less than the pre-defined threshold, then the information is classified as attributable.

13. The one or more non-transitory machine-readable information storage mediums as claimed in claim 11, wherein a provenance check is performed to check cause of hallucinations if the retriever lacks sufficient information to validate the retrieved information.

14. The one or more non-transitory machine-readable information storage mediums as claimed in claim 11, wherein the chunk-based classifier is trained using a predefined strategic learning approach.

15. The one or more non-transitory machine-readable information storage mediums as claimed in claim 11, wherein the predefined strategic learning approach includes an increased complexity technique and a decreased complexity technique.
